# EUROPÄISCHE PATENTSCHRIFT

(11) **EP 2 575 545 B1**
(45) Veröffentlichungstag und Bekanntmachung des Hinweises auf die Patenterteilung: **06.07.2016**
(21) Anmeldenummer: 11715383.3
(22) Anmeldetag: 24.03.2011
(51) Int. Cl.: A47B 88/04, F16C 13/00

(54) **WÄLZKÖRPER EINES LAUFWAGENKÄFIGS FÜR SCHUBLADENFÜHRUNGEN**
ROLLING BODY OF A MOVING CARRIAGE CAGE FOR DRAWER GUIDES
CORPS DE ROULEMENT DE LA CAGE D'UN CHARIOT DE ROULEMENT POUR GUIDES À TIROIR

(30) Priorität: 25.05.2010 AT 8492010
(43) Veröffentlichungstag der Anmeldung: 10.04.2013
(73) Patentinhaber: Julius Blum GmbH, 6973 Höchst (AT)
(72) Erfinder: HÄMMERLE, Hermann, A-6890 Lustenau (AT); BÖSCH, Albert, A-6974 Gaißau (AT)
(74) Vertreter: Torggler & Hofinger Patentanwälte
(86) Internationale Anmeldenummer: PCT/AT2011/000147
(87) Internationale Veröffentlichungsnummer: WO 2011/146951

(56) Entgegenhaltungen:
- EP-A1- 0 439 774
- EP-A1- 1 407 691
- EP-A2- 1 967 094
- WO-A1-2007/065180
- DE-A1- 4 104 271
- DE-A1- 10 317 311
- DE-A1-102005 050 353
- DE-U1-202007 011 352

## Beschreibung

Die Erfindung betrifft einen Wälzkörper eines Laufwagenkäfigs für Schubladenführungen. Weiters betrifft die Erfindung einen Laufwagenkäfig für eine Schubladenführung mit solchen Wälzkörpern sowie eine Schubladenführung mit einem Laufwagenkäfig und ein Möbel mit einer Schubladenführung.

Derartige Wälzkörper dienen im Wesentlichen der Übertragung der Bewegungsenergie zwischen meist metallischen Schubladenschienen. Diese Wälzkörper sind in einem zwischen Schienen angeordneten Laufwagenkäfig drehbar gelagert und müssen im geschlossenen Zustand der Schublade teilweise die statische Belastung übernehmen und beim Bewegen ein möglichst problemloses und leichtes Ein- und Ausziehen der Schublade aus dem Möbelkorpus eines Möbels garantieren.

Eine Ausziehführung für Schubladen geht auch aus der DE 20 2007 011 352 U1 hervor. Als Wälzkörper können dabei Rotationskörper aus Metall, Kunststoff oder Keramik Verwendung finden. Die Ausgestaltung kann so getroffen sein, dass wenigstens ein Teil der Wälzkörper zumindest bereichsweise einen Mantel aus einem elastisch verformbaren Material aufweist und/oder mit Aufsätzen, vorzugsweise Gummiringen, aus einem elastisch verformbaren Material versehen ist.

Wälzkörper in einem Laufwagenkäfig gehen beispielsweise auch aus der WO 2008/046118 A2 hervor. Nachteilig bei diesen einstückigen Wälzkörpern für Laufwagenkäfige ist, dass sie relativ schnell verschleißen, bei statischer Belastung zwischen metallischen Schubladenschienen abgeplattet werden und oftmals Abplatzungen aufweisen, die im Herstellungsverfahren begründet sind.

Die Aufgabe der Erfindung besteht daher darin, gegenüber dem Stand der Technik verbesserte Wälzkörper bzw. einen verbesserten Laufwagenkäfig anzugeben. Insbesondere soll die Festigkeit der Wälzkörper erhöht werden, die Abplattungstendenz reduziert werden, die Lastunterstützung verbessert werden und dennoch eine gewisse Elastizität des Wälzkörpers und eine Reduktion des Verschleißes gegeben sein.

Dies wird für einen Wälzkörper mit den Merkmalen des Oberbegriffes des Anspruchs 1 und einen Laufwagenkäfig mit den Merkmalen des Oberbegriffes des Anspruchs 8 dadurch erreicht, dass der Wälzkörper einen innen liegenden Kernteil und einen separaten, den Kernteil umgebenden Mantelteil aufweist, wobei die Kugeldruckhärte des Mantelteils größer ist als die des Kernteils und wobei die Breite des Wälzkörpers größer als der Durchmesser des Wälzkörpers ist. Durch diese Zweiteiligkeit des erfindungsgemäßen Wälzkörpers können die bei der bisher üblichen einteiligen Herstellung entstehenden Abplatzungen verhindert werden, da die einzelnen Komponenten nun einfacher lunkerfrei hergestellt werden können. Zudem ergibt sich die Möglichkeit, die einzelnen Komponenten Kernteil und Mantelteil an die speziellen Gegebenheiten im Laufwagenkäfig passend auszuführen.

Demgemäß ist bei einer ersten erfindungsgemäßen Ausführungsform vorgesehen , dass der Kernteil und der Mantelteil aus zueinander unterschiedlichen Materialien wie Kunststoff und Stahl bestehen. Dadurch kann die auftretende Belastung durch die Materialien der Wälzkörper ideal abgeleitet werden, ohne unnötigen Verschleiß zu verursachen.

Bei einer zweiten erfindungsgemäßen Ausführungsform bestehen der Kernteil und der Mantelteil aus unterschiedlichen Kunststofftypen.

Erfindungsgemäß ist vorgesehen, dass die Kunststoffe des Kernteils und des Mantelteils unterschiedliche Kugeldruckhärten aufweisen. Durch diese, unterschiedliche Kugeldruckhärten aufweisenden, Bestandteile des Wälzkörpers wird eine wesentliche Verbesserung der Eigenschaften des gesamten Laufwagens erreicht und eine leichtgängigere und weniger verschleißende Schubladenführung gegenüber dem Stand der Technik verwirklicht.

Generell gibt es zwar bei gattungsfremden Laufrollen (siehe AT 317 473, DE 41 08 884 A1, DE 41 04 271 A1, DE 26 02 979, DE 24 61 341 und DE 39 22 716 A1) eine Zweiteiligkeit, jedoch sind diese durch Ihre Größe und Anbringungsart keinesfalls in Laufwagenkäfigen einsetzbar. Zudem weisen diese aus dem Stand der Technik bekannten großen Laufrollen keinen achslosen Kernteil, der im Wesentlichen als Vollzylinder ausgebildet ist, auf und sind unter anderem auch deswegen nicht in Laufwagenkäfigen einsetzbar. Darüber hinaus sind diese gattungsfremden Laufrollen immer als einzelne, hoch beanspruchte Rollen Teil einer Schubladenführung, während die erfindungsgemäßen Wälzkörper meist im Verbund mit mehreren Wälzkörpern im Laufwagenkäfig angeordnet sind. Somit wirken sich Änderungen in deren Beschaffenheit (Zweifeiligkeit) auf eine ganz andere Art und Weise auf das Lauf- und Ausziehverhalten einer Schublade aus, da sich im Verbund beispielsweise die Abplattungstendenzen und die Lastunterstützung auf viele Wälzkörper aufteilen.

Da gemäß einem bevorzugten Ausführungsbeispiel der vorliegenden Erfindung der Kernteil im Wesentlichen als Vollzylinder ausgebildet ist, kann eine wesentliche Qualitätsverbesserung erreicht werden, indem insbesondere der Kernteil als kompaktes Kunststoffteil hergestellt wird, ohne dass eine Ausnehmung bzw. ein Loch für einen - im gattungsfremden Stand der Technik notwendigen - Achsstift freigelassen werden muss. Im gattungsfremden Stand der Technik sind die Kernteile immer als hohle Zylinder und nicht als Vollzylinder ausgeführt, weshalb sich der Kernteil bei einem bevorzugten Wälzkörper der vorliegenden Erfindung von der radial innen liegenden Oberfläche des Mantelteils (also innerhalb des Mantelteils) bis zur gedachten Achse des Wälzkörpers erstreckt. Durch diese Kompaktheit des Kernteils wird vor allem eine bessere Stabilität des gesamten Wälzkörpers erreicht, da dieser kompakte Kernteil weniger Quetschungen ausgesetzt ist bzw. diese besser ableiten kann als ein ringförmiger Kernteil, der eine stabilitätsmindernde Achsausnehmung aufweist.

Gemäß einem Ausführungsbeispiel der vorliegenden Erfindung kann vorgesehen sein, dass der Mantelteil eine höhere Kugeldruckhärte als der Kernteil aufweist, wobei der zweite Kunststoff eine über 125 N/mm², vorzugsweise über 140 N/mm², liegende Kugeldruckhärte und der erste Kunststoff eine unter 105 N/mm², vorzugsweise unter 90 N/mm², liegende Kugeldruckhärte aufweist. Bei einem solchen Wälzkörper mit einem verstärkten Mantel und einem relativ weichen Kern (außen hart, innen weich) ergeben sich als positive Eigenschaften eine wesentliche Reduktion der Abplattung, eine Lastunterstützung des Mantels und eine Erhöhung der Elastizität des Wälzkörpers.

Für die unterschiedlichen Kunststofftypen kann bevorzugt vorgesehen sein, dass einer der Kunststoffe Polyoximethylen (POM) mit einer Kugeldruckhärte von 150 bis 170 N/mm² ist und dass einer der Kunststoffe ein Polyamid, vorzugsweise PA6, mit einer Kugeldruckhärte von 65 bis 80 N/mm² ist. Somit können diese beiden Kunststofftypen je nach Verwendungszweck und Belastungsart des Wälzkörpers im Laufwagenkäfig an unterschiedlichen Stellen eingesetzt werden.

Zusätzliche Unterschiede, die für die Verwendung dieser Kunststoffe als Wälzkörper wichtige Kriterien bilden, sind im Folgenden aufgezählt:

| | POM | PA6 |
|---|---|---|
| E-Mödul | 2800 - 3200 N/mm² | 1400 - 3200 N/mm³ |
| Dichte | 1,41 - 1,43 g/cm³ | 1,13 - 1,14 g/cm³ |
| Reißdehnung | 45 - 70 % | 40 - 150 % |
| Reißfestigkeit bzw. Streckspannung | 70 - 80 N/mm² | 45 - 65 N/mm² |

Die Kugeldruckhärte (auch Kugeleindruckhärte genannt) bestimmt im Wesentlichen die visko-elastische Verformungskomponente der Kunststoffe. Wird während der Härteprüfung des Kunststoffes ein im Prüfverfahren eingesetzter Eindringkörper entlastet, geht der elastische Anteil der Deformation augenblicklich, der visko-elastische Anteil anschließend allmählich zurück. Daher wird der Eindringkörper während der Härtemessung an Kunststoffen über eine gewisse Zeit belastet und dann unter Last die gesamte elastische und visko-elastische Eindringtiefe gemessen. Ein für die Bestimmung dieser Parameter heranzuziehender Kugeleindruckversuch sollte auf der DIN EN ISO 2039-1 basieren.

Gemäß einem bevorzugten Ausführungsbeispiel der Erfindung kann vorgesehen sein, dass der Wälzkörper in einem Zwei-Komponenten-Spritzgussverfahren hergestellt ist. Durch dieses Herstellverfahren können die bisher oft aufgetretenen Abplatzungen vermieden werden, da beim Spritzgießen der beiden Komponenten diese im Wesentlichen lunkerfrei bleiben, wobei diese Lunker sonst in weiterer Folge diese Abplatzungen verursachen. Durch das Aufschrumpfen des Mantelteils auf den Kernteil wird auch eine innigere Verbindung zwischen den beiden Bestandteilen des Wälzkörpers erreicht. Es soll nicht ausgeschlossen sein, dass beispielsweise der Kernteil selbst in einem solchen bevorzugten Zwei-Komponenten-Spritzgießverfahren hergestellt wird. Alternativ soll auch nicht ausgeschlossen sein, dass die beiden Kunststöffkomponenten extrudiert werden und nach der Extrusion auf eine bestimmte Wälzkörperbreite abgelängt werden. Als weitere Alternative können die beiden Komponenten des Wälzkörpers auch erst bei der Montage des Laufwagenkäfigs in der Schubladenführung zusammengesetzt werden.

Um aufgrund der Achslosigkeit der Wälzkörper eine Drehbarkeit und Führung der Wälzkörper im Laufwagenkäfig zu erreichen, kann bevorzugt vorgesehen sein, dass der Wälzkörper zwei Stirnseiten aufweist, wobei in den Stirnseiten Führungserhöhungen oder Führungsvertiefungen ausgebildet sind, wobei die Führungserhöhungen oder Führungsvertiefungen in Richtung Achse weniger als 20 %, vorzugsweise weniger als 10 %, der Breite des Wälzkörpers vom Wälzkörper wegragen bzw. in den Wälzkörper hineinreichen.

Da die erfindungsgemäßen Wälzkörper meist sehr hohe Lasten auch während des Bewegens der Schublade tragen müssen, ist erfindungsgemäß vorgesehen, dass die Breite des Wälzkörpers größer als der Durchmesser des Wälzkörpers ist. Dabei kann das Verhältnis der Breite des Wälzkörpers zum Durchmesser des Wälzkörpers zwischen 1,01 zu 1 und 1,8 zu 1, vorzugsweise zwischen 1,05 zu 1 und 1,35 zu 1, liegen.

Bevorzugte Abmessungen eines erfindungsgemäßen Wälzkörpers sind in Anspruch 7 angegeben, wobei der Durchmesser des Wälzkörpers zwischen 1 und 8 mm, vorzugsweise zwischen 3 und 6,5 mm, beträgt und die Dicke des Mantelteils quer zur Achse des Wälzkörpers zwischen 0,1 und 2,5 mm, vorzugsweise zwischen 0,2 und 0,5 mm, beträgt.

Eine bevorzugte Ausführungsform der vorliegenden Erfindung kann vorsehen, dass im Wälzkörper eine Verstärkungsschicht aus Glasfaser angeordnet ist. Zudem soll nicht ausgeschlossen sein, dass trotz der bereits dargelegten Vorteile eines Kernteils als Vollzylinder dennoch ein schmaler Achsstift im Wälzkörper ausgebildet ist.

Gemäß einem bevorzugten Ausführungsbeispiel eines erfindungsgemäßen Laufwagenkäfigs kann vorgesehen sein, dass alle im Laufwagenkäfig drehbar gelagerten Wälzkörper einen Kernteil aus einem ersten Kunststoff und einen Mantelteil aus einem zweiten Kunststoff aufweisen, wobei die Kunststoffe des Kernteils und des Mantelteils unterschiedliche Kugeldruckhärten aufweisen. Je nach Einsatzort und Belastungsbereich können die einzelnen Wälzkörper zueinander unterschiedliche Kunststoffe mit unterschiedlichen Kugeldruckhärten bzw. unterschiedliche Kunststofftypen aufweisen. Generell gelten auch für den Laufwagenkäfig dieselben bevorzugten Ausführungsvarianten wie für den Wälzkörper.

Weiters kann bevorzugt vorgesehen sein, dass in den Wälzkörpern stirnseitig Führungserhöhungen oder Führungsvertiefungen ausgebildet sind und dass der Laufwagenkäfig ein Gehäuse mit Aufnahmeräumen für die Wälzkörper aufweist, wobei das Gehäuse in den Aufnähmeräumen Halteeinbuchtungen oder Haltefortsätze aufweist, an denen die Wälzkörper über die Führungserhöhungen oder Führungsvertiefungen drehbar gelagert und gehalten sind.

Schutz wird auch begehrt für eine Schubladenführung nach Anspruch 11 und ein Möbel nach Anspruch 12.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: einen Längsschnitt durch eine Laufrolle nach dem Stand der Technik,
- Fig. 2: einen erfindungsgemäßen Wälzkörper im Längsschnitt,
- Fig. 3: einen Längsschnitt durch eine Wälzkörper mit Führungsvertiefung,
- Fig. 4: einen Längsschnitt durch eine Wälzkörper mit Führungserhöhung,
- Fig. 5: eine 3D-Ansicht eines Wälzkörpers,
- Fig. 6: einen Querschnitt durch den Wälzkörper,
- Fig. 7: eine Explosionsdarstellung eines Laufwagenkäfigs,
- Fig. 8: einen Laufwagenkäfig mit eingesetzten Wälzkörpern.
- Fig. 9: einen Laufwagenkäfig mit Schnitt A-A,
- Fig. 10: einen Laufwagenkäfig mit Schnitt B-B,
- Fig. 11: einen Wälzkörper mit Schnitt C-C,
- Fig. 12: eine Explosionsdarstellung einer Schubladenführung,
- Fig. 13: eine zusammengesetzte Schubladenführung,
- Fig. 14: ein Möbel mit an Schubladenführungen geführten Schubladen.

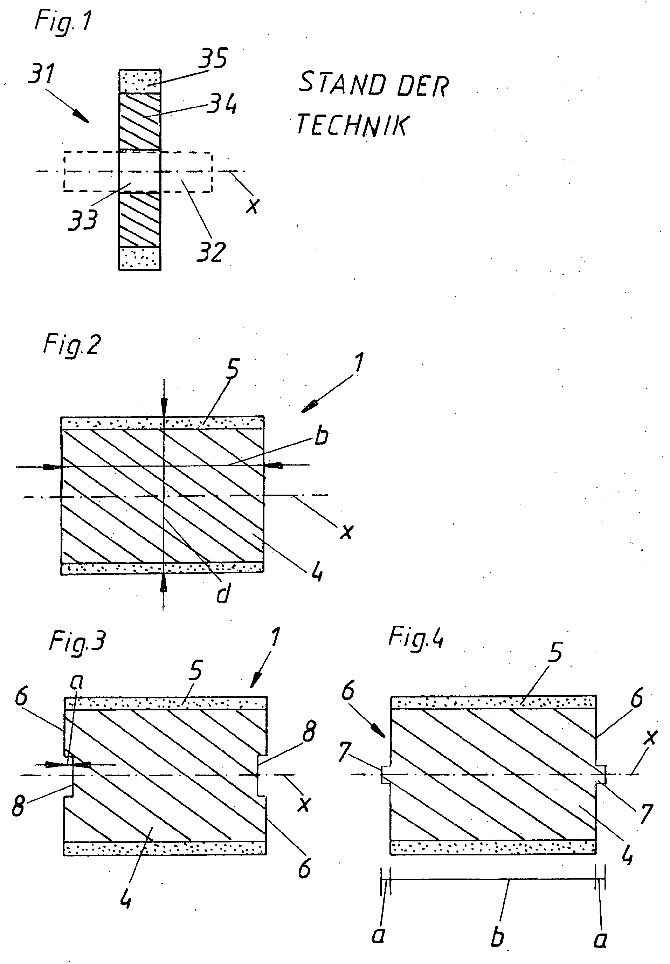

Fig. 1 zeigt eine relativ große Laufrolle 31 (mit ca. 1,5 cm Durchmesser) nach dem Stand der Technik, wie sie beispielsweise als einzelne Führungsrolle für eine Schubladenschiene in einer Korpusschiene dienen kann. Dabei ist bereits bekannt, einen Mantelteil 35 und einen Kernteil 34 aus unterschiedlichen Kunststoffen herzustellen. Aufwändig bei diesen Laufrollen 31 nach dem Stand der Technik ist unter anderem, dass immer eine Achsausnehmung 33 für einen Achsstift 32 vorgesehen sein muss, über den die Rolle beispielsweise an der Ladenschiene rollbar gelagert ist.

Demgegenüber ist in Fig. 2 dargestellt, wie ein Ausführungsbeispiel eines erfindungsgemäßen Wälzkörpers 1 einen kompakten, achslosen Kernteil 4 in Form eines Vollzylinders aufweist, der von einem Mantelteil 5 aus einem zum Kernteil 4 unterschiedlichen und eine unterschiedliche Kugeldruckhärte aufweisenden Mantelteil 5 besteht. Durch die bevorzugte Zwei-Komponenten-Spritzgießherstellung eines solchen Wälzkörpers 1 (und/oder nur des Kernteils 4) ergibt sich eine wesentliche Qualitätssteigerung, da keine Lunker (Lufteinschlüsse) entstehen. Dabei kann beispielsweise in einem ersten Schritt ein innerer Kernteil 4 mit einem Durchmesser d von ca. 1,5 bis 4 mm gespritzt werden. Anschließend wird in einem zweiten Schritt der innere Kernteil 4 mit einem äußeren Kernteil 4 gleichen Materials auf einen Gesamtdurchmesser von ca. 3 bis 7 mm umspritzt. Dadurch werden eine Verlängerung der Lebensdauer und eine Erhöhung der Festigkeit des Zwei-Komponenten-Kernteils 4 und/oder des Zwei-Komponenten-Wälzkörpers 1 erreicht. Die Dicke des Kernteiles 4 im Vergleich zum Mantelteil 5 kann gegenüber dem Ausführungsbeispiel in Fig. 2 erheblich variieren. Wesentlich für die Funktionalität ist, dass die Breite b des Wälzkörpers 1 gemessen in Richtung der Achse x größer als der Durchmesser d des Wälzkörpers 1 ist.

In den Fig. 3 und 4 sind zueinander alternative Ausführungsbeispiele eines Wälzkörpers 1 gezeigt, wobei einerseits eine Führungsvertiefung 8 mit einer Vertiefungstiefe a als Teil einer Halte- bzw. Führungseinrichtung des Wälzkörpers 1 an einem Laufwagenkäfig 2 dienen kann und andererseits in entsprechend umgekehrter Ausführung eine Führungserhöhung 7 mit einer Erhöhungsbreite a am Wälzkörper 1 ausgebildet sein kann.

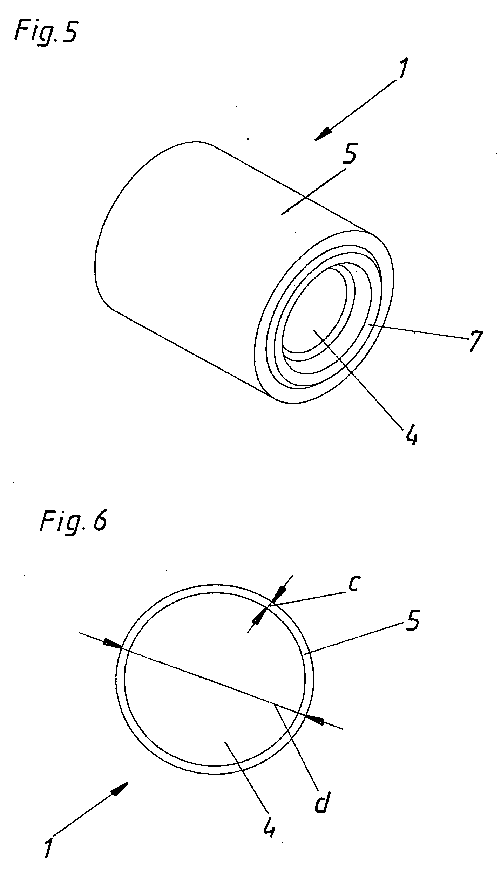

In Fig. 5 ist ein Wälzkörper 1 in 3D-Ansicht gezeigt, wobei im Bereich des Kernteils 4 eine Führungsvertiefung 8 ausgebildet ist, welche von einer im Wesentlichen kreisförmigen Führungserhöhung 7 umgeben ist. Diese Führungserhöhung 7 weist abgeschrägte Flanken auf, was das Einbringen des Wälzkörpers 1 in einen in einem Laufwagenkäfig 2 ausgebildeten Aufnahmeraum 10 mit Haltefortsatz 12 erleichtert.

In Fig. 6 ist ein Querschnitt durch einen Wälzkörper 1 gezeigt, wobei die Manteldicke c bevorzugt zwischen 0,1 und 0,7 mm betragen kann.

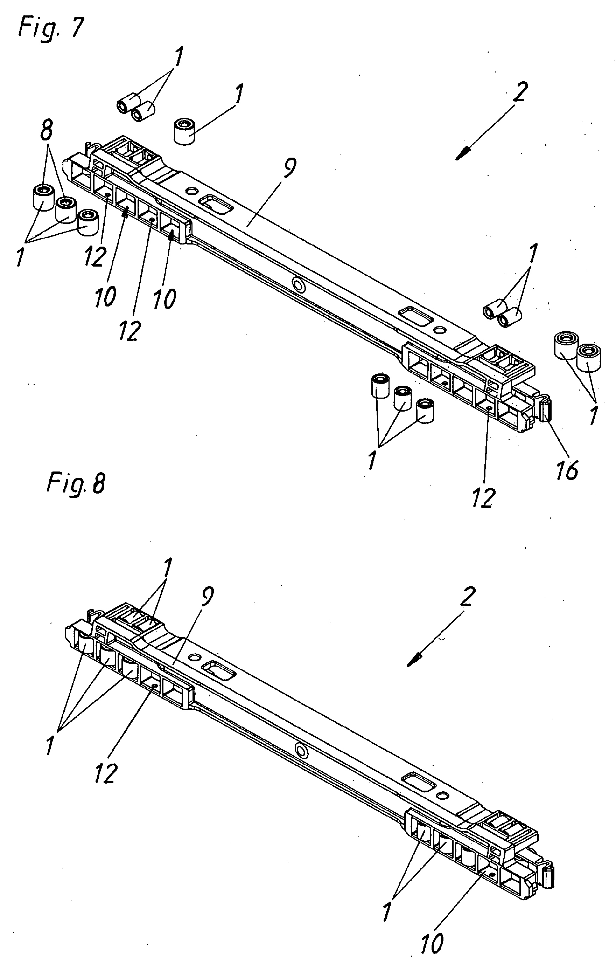

Fig. 7 zeigt eine Explosionsdarstellung eines Laufwagenkäfigs 2, der als wesentliche Teile ein vorzugsweise aus Kunststoff bestehendes und spritzgegossenes Gehäuse 9 und eine Vielzahl von Wälzkörpern 1 aufweist. Im Gehäuse 9 sind an diversen Stellen Aufnahmeräume 10 für die Wälzkörper 1 ausgebildet, wobei in diese Aufnahmeräume 10 Haltefortsätze 12 hineinragen, über die die Wälzkörper 1 über die Vertiefungen 8 gehalten sind. Diese Haltefortsätze 12 dienen dabei im Wesentlichen nur dazu, beim Zusammenbauen der Schubladenführung das Herausfallen der nur lose in die Aufnahmeräume 10 eingebrachten Wälzkörper 1 zu verhindern. An den Enden des Laufwagenkäfigs 2 können Laufwagendämpfer 16 angeordnet sein. In Fig. 8 sind die Wälzkörper 1 in den Aufnahmeräumen 10 angeordnet.

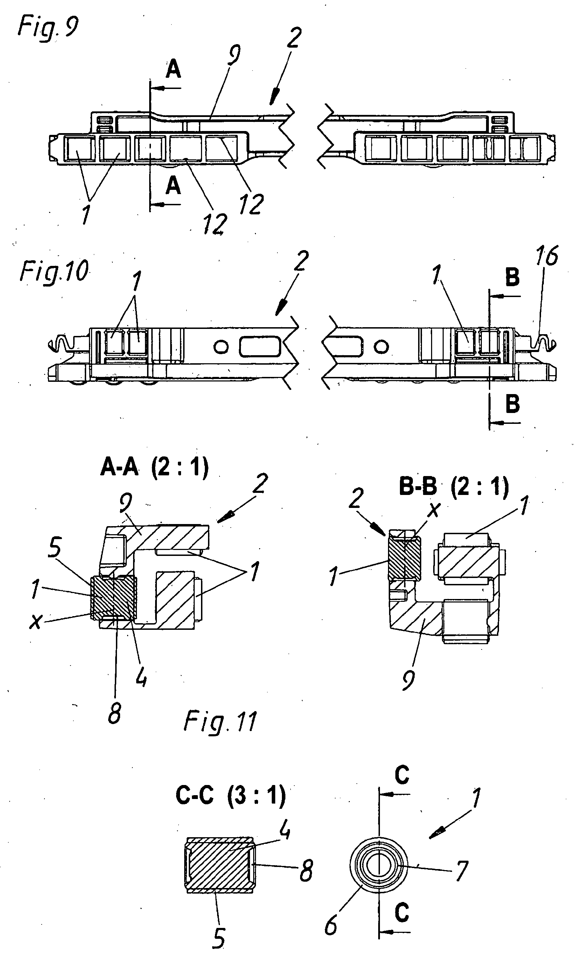

Fig. 9 zeigt eine Seitenansicht eines Laufwagenkäfigs 2 mit dem Schnitt A-A, wobei ersichtlich ist, wie mehrere Wälzkörper 1 im Gehäuse 9 des Laufwagenkäfigs 2 über Haltefortsätze 12 bzw. Führungsvertiefungen 8 gehalten sind. In Fig. 10 ist in Draufsicht der Laufwagenkäfig 2 mit dem Schnitt B-B dargestellt. In Fig. 11 ist eine Ansicht auf die Stirnseite 6 eines Wälzkörpers 1 dargestellt, wobei in Schnitt C-C die Zweikomponentigkeit (Kernteil 4 und Mantelteil 5) des Wälzkörpers 1 ersichtlich ist.

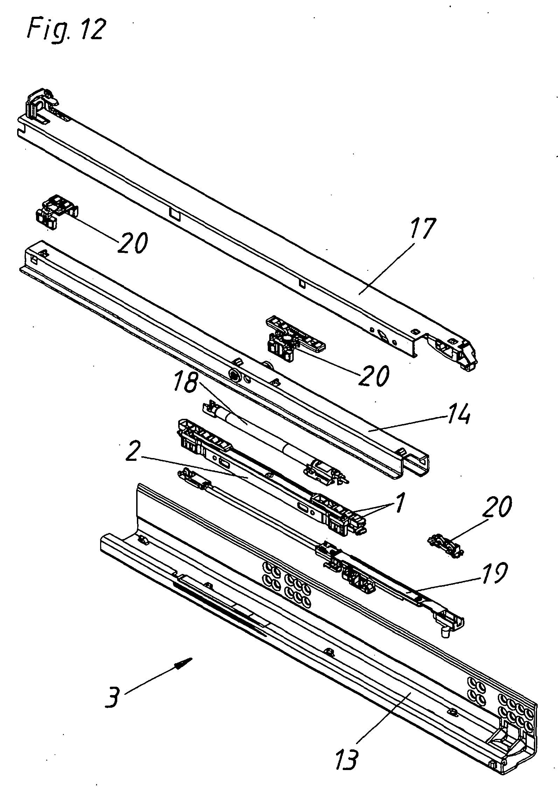

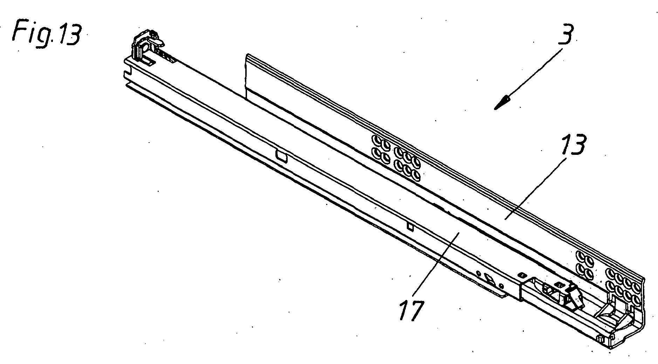

Fig. 12 zeigt in einer Explosionsdarstellung die wesentlichen Bestandteile der Schubladenführung 3, bestehend aus einem Schienenteil 13 in Form einer Korpusschiene, einem Schienenteil 14 in Form einer Mittelschiene, einer Ladenschiene 17 und einem zwischen Korpusschiene 13 und Mittelschiene 14 angeordneten Laufwagenkäfig 2 mit Wälzkörpern 1. Weiters kann die Schubladenführung 3 eine Ausstoßvorrichtung 19, eine Einzugsvorrichtung 18 und diverse weitere Elemente 20 umfassen. In Fig. 13 sind die Bestandteile aus Fig. 12 in zusammengesetztem Zustand ersichtlich.

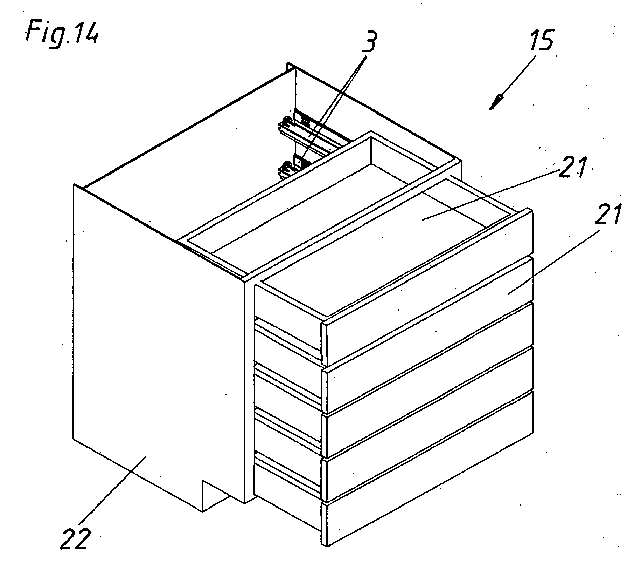

Abschließend zeigt Fig. 14 ein Möbel 15, bestehend aus mehreren Schubladen 21, die in einem Möbelkorpus 22 über erfindungsgemäße Schubladenführungen 3 ein- und ausfahrbar sind.

## Patentansprüche

1. Wälzkörper (1) eines Laufwagenkäfigs (2) für Schubladenführungen (3), wobei der Wälzkörper einen innen liegenden Kernteil (4) und einen separaten, den Kernteil (4) umgebenden Mantelteil (5) äufweist, wobei der Kernteil (4) und der Mantelteil (5) aus zueinander unterschiedlichen Materialien wie Kunststoff und Stahl bestehen oder dass der Kernteil (4) und der Mantelteil (5) aus unterschiedlichen Kunststofftypen bestehen, wobei die Kugeldruckhärte des Mantelteils (5) größer ist als die des Kernteils (4), dadurch gekenzeichnet, dass die Breite des Wälzkörpers (1) größer als der Durchmesser (d) des Wälzkörpers (1) ist.

2. Wälzkörper nach Anspruch 1, dadurchgekennzeichnet, dass der Mantelteil (5) eine höhere Kugeldruckhärte als der Kernteil (4) aufweist, wobei der zweite Kunststoff eine über 125 N/mm², vorzugsweise über 140 N/mm², liegende Kugeldruckhärte und der erste Kunststoff eine unter 105 N/mm², vorzugsweise unter 90 N/mm², liegende Kugeldruckhärte aufweist.

3. Wälzkörper nach Anspruch 1 oder 2, **dadurch gekennzeichnet, dass** der Wälzkörper (1) in einem Zwei-Komponenten-Spritzgussverfahren hergestellt ist.

4. Wälzkörper nach einem der Ansprüche 1 bis 3, **dadurch gekennzeichnet, dass** der Wälzkörper (1) zwei Stirnseiten (6) aufweist, wobei in den Stirnseiten (6) Führungserhöhungen (7) oder Führungsvertiefungen (8) ausgebildet sind.

5. Wälzkörper nach Anspruch 4, **dadurch gekennzeichnet, dass** die Führungserhöhungen (7) oder Führungsvertiefungen (8) in Richtung Achse (x) weniger als 20 %, vorzugweise weniger als 10 %, der Breite (b) des Wälzkörpers (1) vom Wälzkörper (1) wegragen bzw. in den Wälzkörper (1) hineinreichen.

6. Wälzkörper nach einem der Ansprüche 1 bis 5, **dadurch gekennzeichnet, dass** das Verhältnis der Breite (b) des Wälzkörpers (1) zum Durchmesser (d) des Wälzkörpers (1) zwischen 1,01 zu 1 und 1,8 zu 1, vorzugsweise zwischen 1,05 zu 1 und 1,35 zu 1, liegt.

7. Wälzkörper nach einem der Ansprüche 1 bis 6, **dadurch gekennzeichnet, dass** der Durchmesser (d) des Wälzkörpers (1) zwischen 1,5 und 8 mm, vorzugsweise zwischen 3,5 und 6,5 mm, beträgt und die Dicke (c) des Mantelteils (5) quer zur Achse (x) des Wälzkörpers (1) zwischen 0,2 bis 2,5 mm beträgt.

8. Laufwagenkäfig (2) für eine Schubladenführung (3), mit Wälzkörpern (1) nach einem der Ansprüche 1 bis 7, die im Laufwagenkäfig (2) drehbar gelagert sind, **dadurch gekennzeichnet, dass** der Wälzkörper einen innen liegenden Kernteil (4) und einen separaten, den Kernteil (4) umgebenden Mantelteil (5) aufweist.

9. Laufwagenkäfig nach Anspruch 8, **dadurch gekennzeichnet, dass** alle im Laufwagenkäfig (2) drehbar gelagerten Wälzkörper (1) einen Kernteil (4) aus einem ersten Kunststoff und einen Mantelteil (5) aus einem zweiten Kunststoff aufweisen, wobei die Kunststoffe des Kernteils (4) und des Mantelteils (5) unterschiedliche Kugeldruckhärten aufweisen.

10. Laufwagenkäfig nach Anspruch 8 oder 9, **dadurch gekennzeichnet, dass** in den Wälzkörpern (1) stirnseitig Führungserhöhungen (7) oder Führungsvertiefungen (8) ausgebildet sind und dass der Laufwagenkäfig (2) ein Gehäuse (9) mit Aufnahmeräumen (10) für die Wälzkörper (1) aufweist, wobei das Gehäuse (9) in den Aufnahmeräumen (10) Halteeinbuchtungen (11) oder Haltefortsätze (12) aufweist, an denen die Wälzkörper (1) über die Führungserhöhungen (7) oder Führungsvertiefungen (8) drehbar gelagert und gehalten sind.

11. Schubladenführung (3) mit einem Laufwagenkäfig (2) nach einem der Ansprüche 8 bis 10, wobei der Laufwagenkäfig (2) zwischen zueinander beweglichen Schienenteilen (13, 14) der Schubladenführung (3) angeordnet ist.

12. Möbel (15) mit einer Schubladenführung (3) nach Anspruch 11.

## Claims

1. Rolling body (1) of a carriage cage (2) for drawer guides (3), wherein the rolling body (1) has an inwardly disposed core portion (4) and a separate casing portion (5) surrounding the core portion (4), wherein the core portion (4) and the casing portion (5) consist of mutually different materials like plastic and steel or that the core portion (4) and the casing portion (5) consist of different types of plastic, wherein the ball indentation hardness of the casing portion (5) is larger than the one of the core portion (4), **characterized in that** the width of the rolling body (1) is greater than the diameter (d) of the rolling body (1).

2. Rolling body according to claim 1, **characterized in that** the casing portion (5) has a higher ball indentation hardness than the core portion (4), wherein the second plastic has a ball indentation hardness above 125 N/mm², preferably above 140 N/mm², and the first plastic has a ball indentation hardness below 105 N/mm², preferably below 90 N/mm².

3. Rolling body according to claim 1 or 2, **characterized in that** the rolling body (1) is produced in a two-component injection moulding process.

4. Rolling body according to one of the claims 1 to 3, **characterized in that** the rolling body (1) has two ends (6), wherein raised guide portions (7) or guide recesses (8) are provided in the ends (6).

5. Rolling body according to claim 4, **characterized in that** the raised guide portions (7) or guide recesses (8) project away from the rolling body (1) or extend into the rolling body (1) respectively in the direction of the axis (x) less than 20 %, preferably less than 10 %, of the width (b) of the rolling body (1).

6. Rolling body according to one of the claims 1 to 5, **characterized in that** the ratio of the width (b) of the rolling body (1) to the diameter (d) of the rolling body (1) is between 1.01 to 1 and 1.8 to 1, preferably between 1.05 to 1 and 1.35 to 1.

7. Rolling body according to one of the claims 1 to 6, **characterized in that** the diameter (d) of the rolling body (1) is between 1.5 and 8 mm, preferably between 3.5 and 6.5 mm, and the thickness (c) of the casing portion (5) transversely to the axis (x) of the rolling body (1) is between 0.2 and 2.5 mm.

8. Carriage cage (2) for a drawer guide (3), having rolling bodies (1) according to one of the claims 1 to 7, which are supported rotatably in the carriage cage (2), **characterized in that** the rolling body (1) has an inwardly disposed core portion (4) and a separate casing portion (5) surrounding the core portion (4).

9. Carriage cage according to claim 8, **characterized in that** all rolling bodies (1) rotatably supported in the carriage cage (2) have a core portion (4) comprising a first plastic and a casing portion (5) comprising a second plastic, wherein the plastics of the core portion (4) and the casing portion (5) are of different ball indentation hardnesses.

10. Carriage cage according to claim 8 or 9, **characterized in that** raised guide portions (7) or guide recesses (8) are provided at the ends in the rolling bodies (1) and that the carriage cage (2) has a housing (9) with receiving spaces (10) for the rolling bodies (1), wherein the housing (9) has in the receiving spaces (10) holding depressions (11) or holding projections (12) at which the rolling bodies (1) are rotatably supported and held by way of the raised guide portions (7) or guide recesses (8).

11. Drawer guide (3) having a carriage cage (2) according to one of the claims 8 to 10, wherein the carriage cage (2) is arranged between mutually movable rail portions (13, 14) of the drawer guide (3).

12. Article of furniture (15) having a drawer guide (3) according to claim 11.

## Revendications

1. Corps de roulement (1) d'une cage d'un chariot de roulement (2) pour guides de tiroirs (3), dans lequel le corps de roulement présente une partie centrale (4) située à l'intérieur et une partie formant enveloppe (5) distincte, entourant la partie centrale (4), dans lequel la partie centrale (4) et la partie formant enveloppe (5) sont composées respectivement de différents matériaux comme une matière synthétique ou de l'acier ou la partie centrale (4) et la partie formant enveloppe (5) sont composées de différents types de matière synthétique, la dureté Brinell de la partie formant enveloppe (5) étant supérieure à celle de la partie centrale (4), **caractérisé en ce que** la largeur du corps de roulement (1) est supérieure au diamètre (d) du corps de roulement (1).

2. Corps de roulement selon la revendication 1, **caractérisé en ce que** la partie formant enveloppe (5) présente une dureté Brinell plus élevée que la partie centrale (4), dans lequel la deuxième matière synthétique présente une dureté Brinell supérieure à 125 N/mm², de préférence supérieure à 140 N/mm², et la première matière synthétique présente une dureté Brinell inférieure à 105 N/mm², de préférence inférieure à 90 N/mm².

3. Corps de roulement selon la revendication 1 ou 2, **caractérisé en ce que** le corps de roulement (1) est produit dans un processus de moulage par injection à deux composants.

4. Corps de roulement selon l'une des revendications 1 à 3, **caractérisé en ce que** le corps de roulement (1) présente deux faces frontales (6), dans lesquelles sont conçues des élévations de guidage (7) ou des cavités de guidage (8).

5. Corps de roulement selon la revendication 4, **caractérisé en ce que** les élévations de guidage (7) ou les cavités de guidage (8) font saillie du corps de roulement (1) ou se prolongent dans le corps de roulement (1) dans le sens de l'axe (x) de moins de 20 %, de préférence de moins de 10 %, de la largeur (b) du corps de roulement (1).

6. Corps de roulement selon l'une des revendications 1 à 5, **caractérisé en ce que** le rapport de la largeur (b) du corps de roulement (1) au diamètre (d) du corps de roulement (1) se situe entre 1,01 pour 1 et 1,8 pour 1, de préférence entre 1,05 pour 1 et 1,35 pour 1.

7. Corps de roulement selon l'une des revendications 1 à 6, **caractérisé en ce que** le diamètre (d) du corps de roulement (1) se situe entre 1,5 et 8 mm, de préférence entre 3,5 et 6,5 mm, et l'épaisseur (c) de la partie centrale (5) transversalement à l'axe (x) du corps de roulement (1) se situe entre 0,2 et 2,5 mm.

8. Cage d'un chariot de roulement (2) pour un guide de tiroirs (3), avec des corps de roulement (1) selon l'une des revendications 1 à 7, qui sont logés de façon pivotante dans la cage d'un chariot de roulement (2), **caractérisée en ce que** le corps de roulement présente une partie centrale située à l'intérieur (4) et une partie formant enveloppe (5) distincte, entourant la partie centrale (4).

9. Cage d'un chariot de roulement selon la revendication 8, **caractérisée en ce que** tous les corps de roulement (1) logés de façon pivotante dans le chariot de roulement (2) présentent une partie centrale (4) composée d'une première matière synthétique et une partie formant enveloppe (5) composée d'une deuxième matière synthétique, dans laquelle les matières synthétiques de la partie centrale (4) et de la partie formant enveloppe (5) présentent différentes duretés Brinell.

10. Cage d'un chariot de roulement selon la revendication 8 ou 9, **caractérisée en ce que** dans les corps de roulement (1) sont conçues du côté frontal des élévations de guidage (7) ou des cavités de guidage (8) et **en ce que** la cage du chariot de roulement (2) présente un boîtier (9) avec des espaces de logement (10) pour les corps de roulement (1), dans laquelle le boîtier (9) présente dans les espaces de logement (10) des indentations de maintien (11) ou des prolongements de maintien (12), sur lesquels les corps de roulement (1) sont logés et maintenus de façon pivotante au moyen des élévations de guidage (7) ou des cavités de guidage (8).

11. Guide de tiroirs (3) avec une cage d'un chariot de roulement (2) selon l'une des revendications 8 à 10, dans lequel la cage de chariot de roulement (2) est disposée entre des parties de rail (13, 14) mobiles les unes par rapport aux autres du guide de tiroirs (3).

12. Meuble (15) avec un guide de tiroirs (3) selon la revendication 11.
